# EUROPEAN PATENT APPLICATION

(11) **EP 4 155 582 A1**
(43) Date of publication of application: **29.03.2023**
(21) Application number: 20942423.3
(22) Date of filing: 24.06.2020
(51) Int. Cl.: F16H 57/023, F16H 3/091, F16H 3/12

(54) **TRANSMISSION AND AUTOMOBILE**

(71) Applicant: Huawei Digital Power Technologies Co., Ltd., Shenzhen, Guangdong 518043 (CN)
(72) Inventor: ZHONG, Hu, Shenzhen, Guangdong 518129 (CN); HU, Xiong, Shenzhen, Guangdong 518129 (CN); TANG, Zhengyi, Shenzhen, Guangdong 518129 (CN); WANG, Ke, Shenzhen, Guangdong 518129 (CN)
(74) Representative: Huawei European IPR
(86) International application number: PCT/CN2020/098218
(87) International publication number: WO 2021/258361

(57) **Abstract**

This application provides a transmission (100) and a vehicle. The transmission (100) may be used in an electric vehicle, a pure electric vehicle, a hybrid electric vehicle, an extended range electric vehicle, a plug-in hybrid electric vehicle, a new energy vehicle, and the like. A first clutch (30) of the transmission (100) is a bidirectional clutch. When the first clutch (30) is disposed on an input shaft (10), the first clutch (30) is located between a first-stage input gear (101) and a second-stage input gear (102). When the first clutch (30) is disposed on a countershaft (20), the first clutch (30) is located between a first-stage output gear (201) and a second-stage output gear (202). Alternatively, the transmission (100) includes the first clutch (30) and a second clutch (50) that are disposed on the input shaft (10) or the countershaft (20). A quantity of components in the transmission is reduced, and a structure of the transmission is simplified, to reduce costs of the transmission, and reduce production costs of the vehicle to some extent.

## Description

### TECHNICAL FIELD

This application relates to the field of vehicle technologies, and in particular, to a transmission and a vehicle.

### BACKGROUND

A transmission is a mechanism used to change a rotational speed and torque from an engine, and the transmission can change a gear ratio between a countershaft and an input shaft, and is also referred to as a gearbox. The transmission includes a variable-speed drive mechanism and a manipulation mechanism. The variable-speed drive mechanism is mainly used to change values and directions of the torque and the rotational speed. The manipulation mechanism is mainly used to control the drive mechanism to change the gear ratio of the transmission, that is, to shift a gear, so as to change a speed and torque. Certainly, some vehicles further have power output mechanisms. Most drive mechanisms transmit power by using an ordinary gear, and some drive mechanisms also transmit power by using an epicyclic gear. An ordinary-gear variable-speed drive mechanism generally transmits power by using a hollow gear, a synchronizer, and the like.

In a conventional technology, the transmission includes an input shaft, a countershaft, an automatic clutch, a unidirectional clutch, a reverse gear, a parking gear, and a gear sleeve. The automatic clutch is disposed on the input shaft, and is configured to connect the input shaft and a high-speed driving gear. The unidirectional clutch is an overrunning clutch, is disposed on the countershaft, and is configured to connect a low-speed driven gear and the countershaft. The reverse gear and the parking gear are disposed on the countershaft. The reverse gear is rigidly connected to the countershaft. The parking gear is sleeved on the countershaft, and is rigidly connected to a housing of the transmission. The gear sleeve is selectively meshed with both the reverse gear and the parking gear, or both the low-speed driven gear and the reverse gear, or only the low-speed driven gear.

However, the foregoing transmission has a large quantity of components. As a result, a structure is complex, and costs are high. This increases production costs of the vehicle to some extent.

### SUMMARY

Embodiments of this application provide a transmission and a vehicle, so that a quantity of components in the transmission is reduced, and a structure of the transmission is simplified, to reduce costs of the transmission, and reduce production costs of the vehicle to some extent. In addition, the transmission smoothly shifts a gear, to ensure normal driving of the vehicle.

A first aspect of embodiments of this application provides a transmission, including an input shaft, a countershaft, and a first clutch disposed on the input shaft or the countershaft, where an end of the input shaft is connected to a motor; a first-stage input gear and a second-stage input gear are disposed on the input shaft, a first-stage output gear and a second-stage output gear are disposed on the countershaft, the first-stage input gear is meshed with the first-stage output gear, and the second-stage input gear is meshed with the second-stage output gear; the first clutch is a bidirectional clutch; and when the first clutch is disposed on the input shaft, the first clutch is located between the first-stage input gear and the second-stage input gear, and the first clutch is configured to connect the input shaft and the first-stage input gear or connect the input shaft and the second-stage input gear; or when the first clutch is disposed on the countershaft, the first clutch is located between the first-stage output gear and the second-stage output gear, and the first clutch is configured to connect the countershaft and the first-stage output gear or connect the countershaft and the second-stage output gear.

According to the transmission provided in this embodiment of this application, the first clutch is a bidirectional clutch. When the first clutch is disposed on the input shaft, the first clutch is located between the first-stage input gear and the second-stage input gear. When the first clutch is disposed on the countershaft, the first clutch is located between the first-stage output gear and the second-stage output gear. While a use function of the transmission is ensured, a quantity of components in the transmission is reduced, and a structure of the transmission is simplified, to reduce costs of the transmission.

In a possible implementation, the transmission includes a first actuation component, and the first actuation component is configured to drive at least a part of the first clutch to move, so that the at least a part of the first clutch is in contact with any one of the first-stage input gear, the first-stage output gear, the second-stage input gear, and the second-stage output gear.

The first actuation component can be disposed to control and drive the first clutch to be in contact with any one of the first-stage input gear, the first-stage output gear, the second-stage input gear, and the second-stage output gear, so that the input shaft or the countershaft is disengaged from or engaged with the first-stage input gear, the first-stage output gear, the second-stage input gear, or the second-stage output gear.

In a possible implementation, the first clutch includes a clutch body and a sliding sleeve connected to the clutch body; and the sliding sleeve may be in contact with any one of the first-stage input gear, the first-stage output gear, the second-stage input gear, and the second-stage output gear, to engage the first clutch with any one of the first-stage input gear, the first-stage output gear, the second-stage input gear, and the second-stage output gear.

In a possible implementation, the first actuation component includes a first actuation member and a first controller connected to the first actuation member, and the first controller is configured to control movement of the first actuation member, so that the first actuation member drives the sliding sleeve of the first clutch to move.

In a possible implementation, the transmission further includes a second clutch, the second clutch is disposed on the input shaft or the countershaft, and the second clutch is configured to connect the input shaft and the second-stage input gear or connect the countershaft and the second-stage output gear. In this way, the second clutch may be configured to engage the second-stage input gear with the input shaft or engage the second-stage output gear with the countershaft, and the first clutch may be configured to engage the first-stage input gear with the input shaft or engage the first-stage output gear with the countershaft. Second-gear engaging is performed by using the second clutch, and first-gear engaging is performed by using the first clutch, so that power interruption can be avoided in a gear shift process, to avoid affecting normal driving of a vehicle and affecting riding comfort.

In a possible implementation, the second clutch includes a friction plate and a clutch cover body, the friction plate is connected to the input shaft or the countershaft, and the clutch cover body is connected to the second-stage input gear or the second-stage output gear; and when the friction plate is in contact with the clutch cover body, the second clutch is engaged with the second-stage input gear or the second-stage output gear, or when the friction plate is separated from the clutch cover body, the second clutch is disengaged from the second-stage input gear or the second-stage output gear.

In a possible implementation, the transmission further includes a second actuation component, and the second actuation component is configured to control disengaging and engaging of the second clutch. The second actuation component can be disposed to control and drive the second clutch to be in contact with the second-stage input gear or the second-stage output gear, so that the input shaft or the countershaft is disengaged from or engaged with the second-stage input gear or the second-stage output gear.

In a possible implementation, the second actuation component includes a second actuation member and a second controller connected to the second actuation member, and the second controller is configured to control movement of the second actuation member, so that the first actuation member drives the friction plate of the second clutch to be close to or away from the clutch cover body.

A second aspect of embodiments of this application provides a transmission, including an input shaft, a countershaft, and a first clutch disposed on the input shaft or the countershaft, where an end of the input shaft is connected to a motor; a first-stage input gear and a second-stage input gear are disposed on the input shaft, a first-stage output gear and a second-stage output gear are disposed on the countershaft, the first-stage input gear is meshed with the first-stage output gear, and the second-stage input gear is meshed with the second-stage output gear; the first clutch is a unidirectional clutch, when the first clutch is disposed on the input shaft, the first clutch is configured to connect the input shaft and the first-stage input gear, or when the first clutch is disposed on the countershaft, the first clutch is configured to connect the countershaft and the first-stage output gear; and the transmission further includes a second clutch, the second clutch is disposed on the input shaft or the countershaft, and the second clutch is configured to connect the input shaft and the second-stage input gear, or the second clutch is configured to connect the countershaft and the second-stage output gear.

The transmission provided in this embodiment of this application includes the first clutch and the second clutch that are disposed on the input shaft or the countershaft. While a use function of the transmission is ensured, a quantity of components in the transmission is reduced, and a structure of the transmission is simplified, to reduce costs of the transmission.

In a possible implementation, the first clutch includes a clutch body and a sliding sleeve connected to the clutch body, and the sliding sleeve may be in contact with the first-stage input gear or the first-stage output gear, to engage the first clutch with the first-stage input gear or the first-stage output gear.

In a possible implementation, the second clutch includes a friction plate and a clutch cover body, the friction plate is connected to the input shaft or the countershaft, and the clutch cover body is connected to the second-stage input gear or the second-stage output gear; and when the friction plate is in contact with the clutch cover body, the second clutch is engaged with the second-stage input gear or the second-stage output gear, or when the friction plate is separated from the clutch cover body, the second clutch is disengaged from the second-stage input gear or the second-stage output gear.

In a possible implementation, the transmission further includes a first actuation component and a second actuation component; the first actuation component is configured to drive at least a part of the first clutch to move, so that the at least a part of the first clutch is in contact with the first-stage input gear or the first-stage output gear; and the second actuation component is configured to control disengaging and engaging of the second clutch.

The first actuation component can be disposed to control and drive the first clutch to be in contact with the first-stage input gear or the first-stage output gear, so that the input shaft or the countershaft is disengaged from or engaged with the first-stage input gear or the first-stage output gear. The second actuation component can be disposed to control and drive the second clutch to be in contact with the second-stage input gear or the second-stage output gear, so that the input shaft or the countershaft is disengaged from or engaged with the second-stage input gear or the second-stage output gear.

In a possible implementation, the first actuation component includes a first actuation member and a first controller connected to the first actuation member, and the first controller is configured to control movement of the first actuation member, so that the first actuation member drives the sliding sleeve of the first clutch to move.

In a possible implementation, the second actuation component includes a second actuation member and a second controller connected to the second actuation member, and the second controller is configured to control movement of the second actuation member, so that the first actuation member drives the friction plate of the second clutch to be close to or away from the clutch cover body.

In a possible implementation of the first aspect or the second aspect, the transmission further includes a parking gear, and both the parking gear and the first clutch are disposed on the input shaft, or both the parking gear and the first clutch are disposed on the countershaft. In this way, the first actuation component drives the sliding sleeve of the first clutch to a location of the parking gear to be engaged with the parking gear, the motor provides power for the input shaft, and after the power of the input shaft is transmitted to the parking gear, the power cannot continue to be transmitted. In this way, a parking function of the vehicle can be implemented.

In a possible implementation of the first aspect or the second aspect, the transmission further includes a final reduction drive component, and the final reduction drive component includes a final reduction input gear and a final reduction output gear meshed with the final reduction input gear; and the final reduction input gear is disposed on the countershaft, a differential is disposed on the final reduction output gear, and the differential is connected to wheels of the vehicle.

In a possible implementation of the first aspect or the second aspect, the first clutch is connected to the input shaft by using a spline joint or through welding, or the first clutch is connected to the countershaft by using a spline joint or through welding.

In a possible implementation of the first aspect or the second aspect, the first-stage input gear and the second-stage input gear are connected to the input shaft by using a bearing, so that the first-stage input gear and the second-stage input gear rotate around the input shaft; or the first-stage output gear and the second-stage output gear are connected to the countershaft by using a bearing, so that the first-stage output gear and the second-stage output gear rotate around the countershaft.

In a possible implementation of the first aspect or the second aspect, the friction plate is connected to the input shaft or the countershaft by using a spline joint or through welding, and the clutch cover body is connected to the second-stage input gear or the second-stage output gear by using a spline joint or through welding.

A third aspect of embodiments of this application provides a vehicle, including at least wheels, a drive component, and a motor, where a rotating shaft of the motor is connected to the wheel by using the drive component; and
the drive component includes a driver shaft and the foregoing transmission, the rotating shaft of the motor is connected to the input shaft of the transmission, and the transmission is connected to the wheel by using the driver shaft.

The vehicle provided in this embodiment of this application includes at least the foregoing transmission. While a use function of the transmission is ensured, a quantity of components in the transmission is reduced, and a structure of the transmission is simplified, to reduce costs of the transmission, and reduce production costs of the vehicle to some extent.

With reference to the accompanying drawings, these and other aspects, implementation forms, and advantages of the example embodiments become apparent based on the embodiments described below. However, it should be understood that the specification and the accompanying drawings are merely used for description, and are not used to limit embodiments of this application. For details, refer to the appended claims. Other aspects and advantages of embodiments of this application are described in the following descriptions, and some thereof are apparent from the descriptions, or are learned from practice of embodiments of this application. In addition, aspects and advantages of embodiments of this application may be implemented and obtained by using a means and a combination that are specifically noted in the appended claims.

### BRIEF DESCRIPTION OF DRAWINGS

FIG. 1 is a schematic diagram of a structure of a transmission according to an embodiment of this application;
FIG. 2 is a schematic diagram of another structure of a transmission according to an embodiment of this application;
FIG. 3 is a schematic diagram of still another structure of a transmission according to an embodiment of this application;
FIG. 4 is a schematic diagram of a drive state of a transmission during first-gear driving according to an embodiment of this application;
FIG. 5 is a schematic diagram of a drive state of a transmission during first-gear braking according to an embodiment of this application;
FIG. 6 is a schematic diagram of a drive state of a transmission during second-gear driving according to an embodiment of this application;
FIG. 7 is a schematic diagram of another drive state of a transmission during second-gear driving according to an embodiment of this application;
FIG. 8 is a schematic diagram of a drive state of a transmission during second-gear braking according to an embodiment of this application;
FIG. 9 is a schematic diagram of another drive state of a transmission during second-gear braking according to an embodiment of this application;
FIG. 10 is a schematic diagram of a drive state of a transmission during parking according to an embodiment of this application; and
FIG. 11 is a schematic diagram of another drive state of a transmission during parking according to an embodiment of this application.

### Description of reference numerals:

100-transmission; 10-input shaft; 11-bearing; 101-first-stage input gear; 102-second-stage input gear; 20-countershaft; 201-first-stage output gear; 202-second-stage output gear; 30-first clutch; 301-clutch body; 302-sliding sleeve; 40-first actuation component; 401-first actuation member; 402-first controller; 50-second clutch; 501 - friction plate; 502-clutch cover body; 60-second actuation component; 601-second actuation member; 602-second controller; 70-parking gear; 80-final reduction drive component; 801-final reduction input gear; 802-final reduction output gear; 90-differential; 200-motor.

### DESCRIPTION OF EMBODIMENTS

Terms used in implementations of this application are merely used to explain specific embodiments of this application, and are not intended to limit this application. The following describes implementations of embodiments of this application in detail with reference to the accompanying drawings.

An electric vehicle has become an important strategic product in the transportation field in countries all over the world, and a transmission is one of important assemblies that affect entire performance of the electric vehicle. The transmission of the current electric vehicle mainly includes a single-speed transmission and a two-speed transmission.

A speed ratio of a single-stage reducer is a fixed value. A working point of a motor cannot be adjusted, and efficiency space is fixed. To achieve a higher vehicle speed, the speed ratio needs be reduced. Therefore, a best speed ratio can be found only in a limited vehicle speed range to achieve a balance between costs and efficiency. This makes it difficult to meet maximum gradeability and a maximum vehicle speed of the electric vehicle and matching of working efficiency of the motor. However, an existing two-speed transmission has a large quantity of components. As a result, a structure is complex, and costs of the transmission are high.

To resolve the foregoing technical problem, embodiments of this application provide a transmission 100. The transmission 100 may be applied to an electric vehicle, a pure electric vehicle, a hybrid electric vehicle, a range-extended electric vehicle, a plug-in hybrid electric vehicle, a new energy vehicle, or the like. The following describes, by using specific embodiments, a structure of the transmission 100 provided in embodiments of this application.

### Embodiment 1

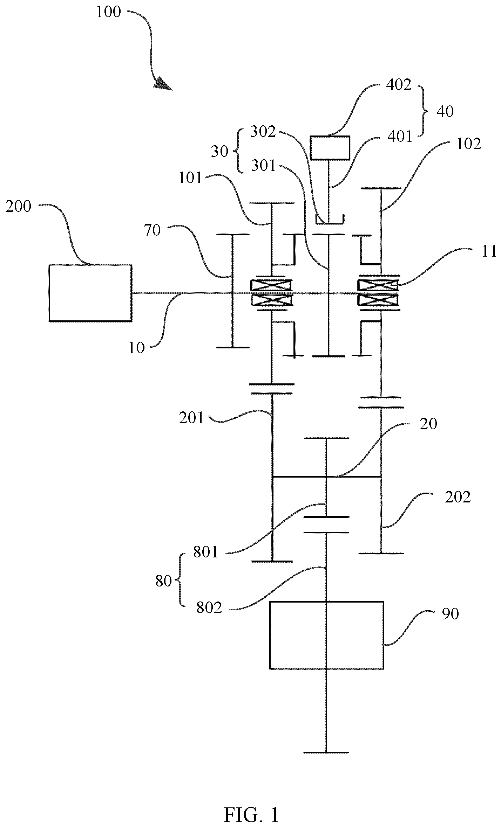

This embodiment of this application provides a transmission 100. Referring to FIG. 1, the transmission 100 may include an input shaft 10, a countershaft 20, and a first clutch 30 disposed on the input shaft 10 or the countershaft 20. An end of the input shaft 10 is connected to a motor 200. The motor 200 is configured to drive the input shaft 10 to provide power for rotation of the input shaft 10.

A first-stage input gear 101 and a second-stage input gear 102 may be disposed on the input shaft 10, and a first-stage output gear 201 and a second-stage output gear 202 may be disposed on the countershaft 20. The first-stage input gear 101 is meshed with the first-stage output gear 201, and the second-stage input gear 102 is meshed with the second-stage output gear 202.

In this embodiment of this application, the first clutch 30 may be a bidirectional clutch. For example, the first clutch 30 may be a synchronizer

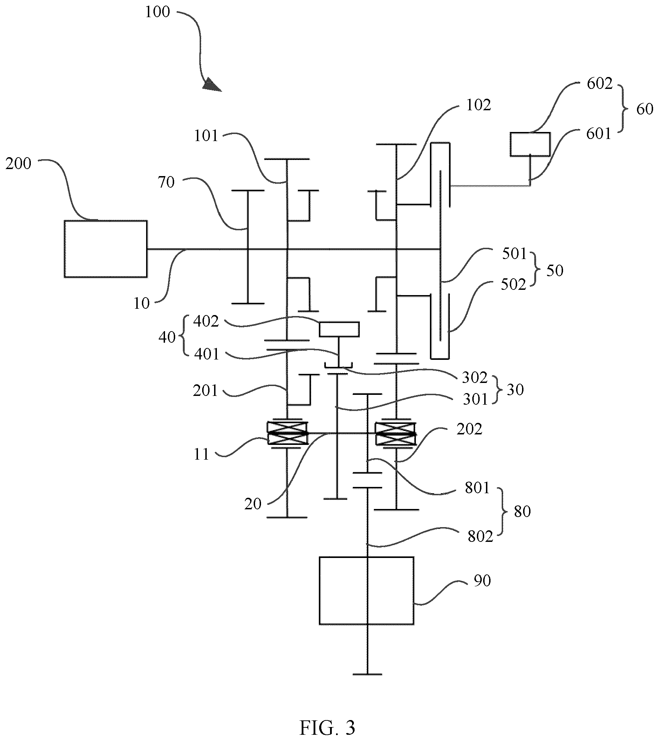

Referring to FIG. 1, the first clutch 30 may be disposed on the input shaft 10, the first clutch 30 is located between the first-stage input gear 101 and the second-stage input gear 102, and the first clutch 30 is configured to connect the input shaft 10 and the first-stage input gear 101 or connect the input shaft 10 and the second-stage input gear 102. Alternatively, the first clutch 30 may be disposed on the countershaft 20 (referring to FIG. 3).

It should be noted that the first clutch 30 may use any possible structure such as a structure with a synchronous ring or a structure without a synchronous ring, for example, a wet clutch or a dry clutch, a single-plate clutch or a multi-plate clutch, an electromagnetic clutch or a hydraulic clutch or a motor clutch, or a normally-opened clutch or a normally-closed clutch. A specific structure of the first clutch 30 is not limited in this embodiment of this application, and the foregoing example imposes no limitation.

In an optional implementation, the first clutch 30 may be connected to the input shaft 10 by using a spline joint or through welding, or the first clutch 30 may be connected to the countershaft 20 by using a spline joint or through welding. It should be noted that the spline joint is generally used to connect a gear and a shaft or connect a coupling and a shaft. A spline may be used to axially fasten a connected component, and has a high bearing capability. Specifically, the spline joint includes an inner spline and an outer spline, and both the inner spline and the outer spline are multi-gear components. A spline on an inner cylindrical surface is the inner spline, and a spline on an outer cylindrical surface is the outer spline.

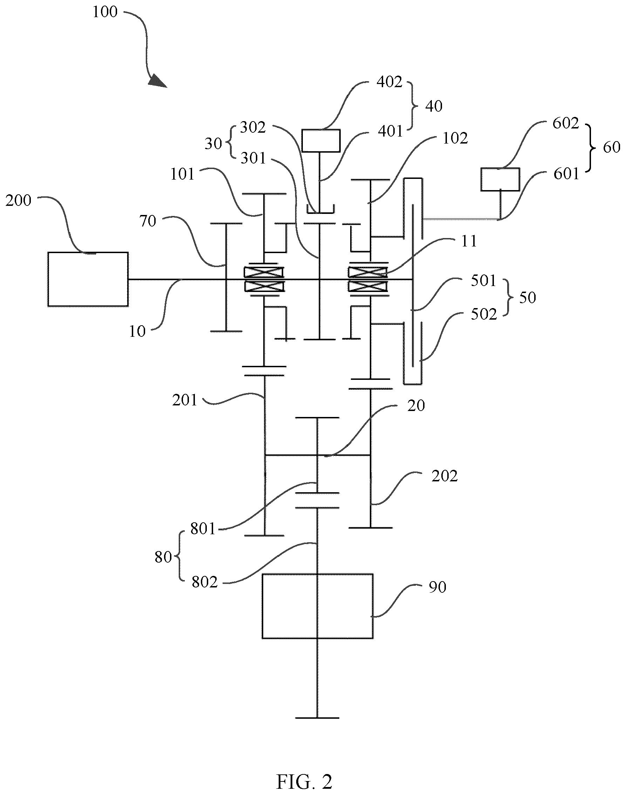

As shown in FIG. 2, the first-stage input gear 101 and the second-stage input gear 102 may be connected to the input shaft 10 by using a bearing 11, so that the first-stage input gear 101 and the second-stage input gear 102 can rotate around the input shaft 10. Alternatively, as shown in FIG. 3, the first-stage output gear 201 and the second-stage output gear 202 may be connected to the countershaft 20 by using a bearing 11, so that the first-stage output gear 201 and the second-stage output gear 202 can rotate around the countershaft 20.

To engage the first clutch 30 with the first-stage input gear 101, the first-stage output gear 201, the second-stage input gear 102, or the second-stage output gear 202, the transmission 100 may further include a first actuation component 40. The first actuation component 40 is configured to drive at least a part of the first clutch 30 to move, so that the at least a part of the first clutch 30 is in contact with any one of the first-stage input gear 101, the first-stage output gear 201, the second-stage input gear 102, and the second-stage output gear 202. The first actuation component 40 can be disposed to control and drive the first clutch 30 to be in contact with any one of the first-stage input gear 101, the first-stage output gear 201, the second-stage input gear 102, and the second-stage output gear 202, so that the input shaft 10 or the countershaft 20 is disengaged from or engaged with the first-stage input gear 101, the first-stage output gear 201, the second-stage input gear 102, and the second-stage output gear 202.

In this embodiment of this application, referring to FIG. 1, the first clutch 30 may include a clutch body 301 and a sliding sleeve 302 connected to the clutch body 301. The sliding sleeve 302 may be in contact with any one of the first-stage input gear 101, the first-stage output gear 201, the second-stage input gear 102, and the second-stage output gear 202, to engage the first clutch 30 with any one of the first-stage input gear 101, the first-stage output gear 201, the second-stage input gear 102, and the second-stage output gear 202. Because the first clutch 30 is connected to the input shaft 10 or the countershaft 20 by using a spline joint or through welding, the input shaft 10 and the first-stage input gear 101 or the second-stage input gear 102 and the countershaft 20 and the first-stage output gear 201 or the second-stage output gear 202 may be disengaged or engaged.

In an optional implementation, as shown in FIG. 1, the first actuation component 40 may specifically include a first actuation member 401 and a first controller 402 connected to the first actuation member 401. The first controller 402 is configured to control movement of the first actuation member 401, so that the first actuation member 401 drives the sliding sleeve 302 of the first clutch 30 to move.

During power shift, that is, in a process of shifting a first gear to a second gear or shifting a second gear to a first gear, a problem of power interruption occurs when the first clutch 30 is used. This affects riding comfort. Therefore, in this embodiment of this application, as shown in FIG. 2, the transmission 100 may further include a second clutch 50. The second clutch 50 is disposed on the input shaft 10 or the countershaft 20. The second clutch 50 is configured to connect the input shaft 10 and the second-stage input gear 102 or connect the countershaft 20 and the second-stage output gear 202.

In this way, the second clutch 50 may be configured to engage the second-stage input gear 102 with the input shaft 10 or engage the second-stage output gear 202 with the countershaft 20, and the first clutch 30 may be configured to engage the first-stage input gear 101 with the input shaft 10 or engage the first-stage output gear 201 with the countershaft 20. Second-gear engaging is performed by using the second clutch 50, and second-gear engaging is performed by using the first clutch 30, so that power interruption can be avoided in a gear shift process, to avoid affecting normal driving of a vehicle and affecting riding comfort.

In this embodiment of this application, as shown in FIG. 2, the second clutch 50 may include a friction plate 501 and a clutch cover body 502. When the second clutch 50 is disposed on the input shaft 10, the friction plate 501 is connected to the input shaft 10, and the clutch cover body 502 is connected to the second-stage input gear 102. In this way, when the friction plate 501 is in contact with the clutch cover body 502, the second clutch 50 is engaged with the second-stage input gear 102, or when the friction plate 501 is separated from the clutch cover body 502, the second clutch 50 is disengaged from the second-stage input gear 102. In other words, torque of a second-stage drive gear can be transmitted by engaging the second clutch 50 with the second-stage input gear 102 and disengaging the second clutch 50 from the second-stage input gear 102.

When the second clutch 50 is disposed on the countershaft 20, the friction plate 501 is connected to the countershaft 20, and the clutch cover body 502 is connected to the second-stage output gear 202. In this way, when the friction plate 501 is in contact with the clutch cover body 502, the second clutch 50 is engaged with the second-stage output gear 202, or when the friction plate 501 is separated from the clutch cover body 502, the second clutch 50 is disengaged from the second-stage output gear 202. In other words, torque of a second-stage drive gear can be transmitted by engaging the second clutch 50 with the second-stage output gear 202 and disengaging the second clutch 50 from the second-stage output gear 202.

It should be noted that, the friction plate 501 may be connected to the input shaft 10 or the countershaft 20 by using a spline joint or through welding, and the clutch cover body 502 may be connected to the second-stage input gear 102 or the second-stage output gear 202 by using a spline joint or through welding.

In a possible implementation, as shown in FIG. 2, the transmission 100 may further include a second actuation component 60, and the second actuation component 60 is configured to control disengaging and engaging of the second clutch 50. The second actuation component 60 can be disposed to control and drive the second clutch 50 to be in contact with the second-stage input gear 102 or the second-stage output gear 202, so that the input shaft 10 or the countershaft 20 is disengaged from or engaged with the second-stage input gear 102 orthe second-stage output gear 202.

As shown in FIG. 2, the second actuation component 60 may include a second actuation member 601 and a second controller 602 connected to the second actuation member 601. The second controller 602 is configured to control movement of the second actuation member 601, so that the second actuation member 601 drives the friction plate 501 of the second clutch 50 to be close to or away from the clutch cover body 502.

In this embodiment of this application, referring to FIG. 1 or FIG. 2, the transmission 100 may further include a parking gear 70, and both the parking gear 70 and the first clutch 30 are disposed on the input shaft 10, or both the parking gear 70 and the first clutch 30 are disposed on the countershaft 20. The first controller 402 controls the first actuation member 401 to drive the sliding sleeve 302 to a location of the parking gear 70 to be engaged with the parking gear 70, the motor 200 provides power for the input shaft 10, and after the power of the input shaft 10 is transmitted to the parking gear 70, the power cannot continue to be transmitted. In this way, a parking function of the vehicle can be implemented. It should be noted that, when the parking gear 70 is disposed on the input shaft 10, torque transmission may further be reduced.

On the basis of the foregoing embodiment, referring to FIG. 1 or FIG. 2, the transmission 100 may further include a final reduction drive component 80. The final reduction drive component 80 may include a final reduction input gear 801 and a final reduction output gear 802 meshed with the final reduction input gear 801. The final reduction input gear 801 is disposed on the countershaft 20, a differential 90 is disposed on the final reduction output gear 802, and the differential 90 is connected to wheels of the vehicle.

In another implementation, as shown in FIG. 3, the first clutch 30 is located on the countershaft 20, the second clutch 50 is located on the input shaft 10, and the first clutch 30 is located between the first-stage output gear 201 and the second-stage output gear 202. In this case, the first clutch 30 is configured to connect the countershaft 20 and the first-stage output gear 201 or connect the countershaft 20 and the second-stage output gear 202. In this way, while a use function of the transmission 100 is ensured, a quantity of components in the transmission 100 is reduced, and a structure of the transmission 100 is simplified, to reduce costs of the transmission 100.

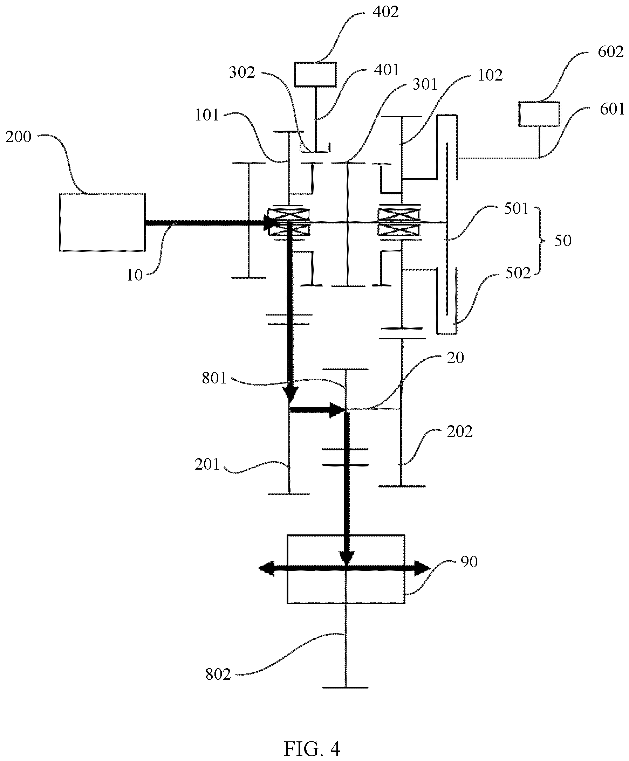

FIG. 2 and FIG. 3 are schematic diagrams of structures of the transmission 100 in a neutral gear state. With reference to FIG. 4 to FIG. 11, the following describes a drive state, of the transmission 100 shown in FIG. 2, when first-gear driving, first-gear braking, second-gear driving, second-gear braking, and parking are implemented.

Referring to FIG. 4, when the vehicle needs to travel at a low speed (for example, in a first-gear driving state), the first controller 402 controls the first actuation member 401 to drive the sliding sleeve 302 of the first clutch 30 to a location of the first-stage input gear 101, so that the first clutch 30 is engaged with the first-stage input gear 101. The friction plate 501 of the second clutch 50 is separated from the clutch cover body 502. In this case, as shown by an arrow direction in FIG. 4, the motor 200 provides power for the input shaft 10, and drive torque of the input shaft 10 is transmitted to the first-stage output gear 201 by using the first-stage input gear 101, to drive the countershaft 20 to rotate. Then, after the drive torque is sequentially transmitted to the differential 90 by using the final reduction input gear 801 and the final reduction output gear 802, the power is output to the wheel connected to the differential 90.

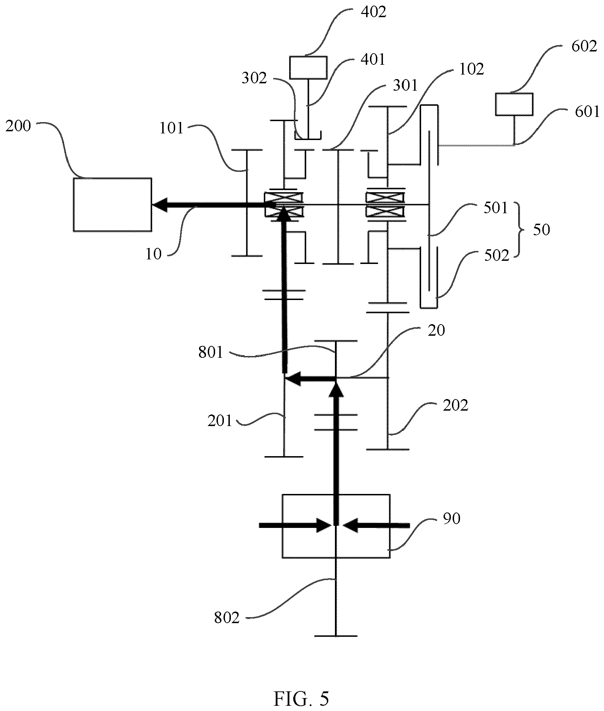

As shown in FIG. 5, when the vehicle needs to stop at a low speed (for example, a first-gear braking state), similarly, the first controller 402 controls the first actuation member 401 to drive the sliding sleeve 302 of the first clutch 30 to a location of the first-stage input gear 101, so that the first clutch 30 is engaged with the first-stage input gear 101. The friction plate 501 of the second clutch 50 is separated from the clutch cover body 502. In this case, the motor is in a power generation mode. As shown by an arrow direction in FIG. 5, torque at a wheel end is sequentially transmitted to the countershaft 20 by using the differential 90, the final reduction output gear 802, and the final reduction input gear 801, and the torque of the countershaft 20 is transmitted to the input shaft 10 by using the first-stage output gear 201 and the first-stage input gear 101, and is output to the motor 200, to implement a first-gear braking function.

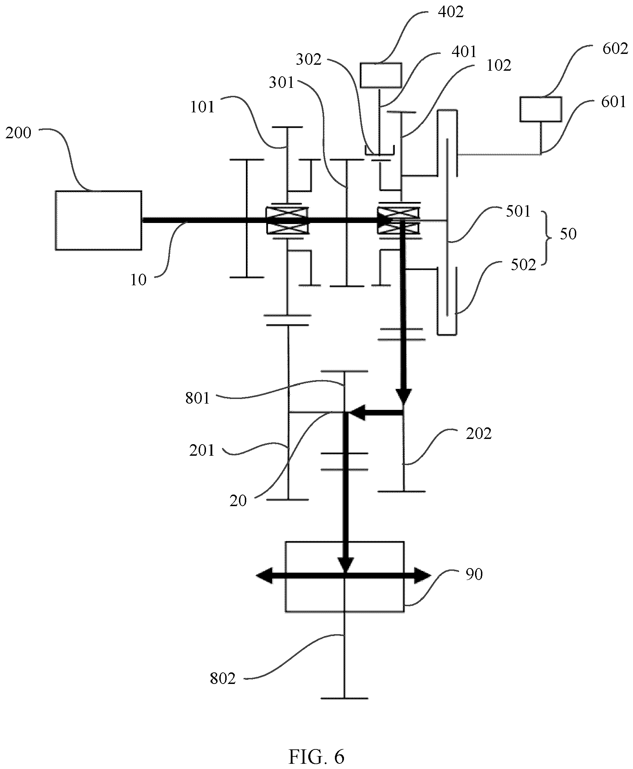

Referring to FIG. 6, when the vehicle needs to travel at a high speed (for example, in a second-gear driving state), the first controller 402 controls the first actuation member 401 to drive the sliding sleeve 302 of the first clutch 30 to a location of the second-stage input gear 102, so that the first clutch 30 is engaged with the second-stage input gear 102, and the friction plate 501 of the second clutch 50 is separated from the clutch cover body 502. In this case, as shown by an arrow direction in FIG. 6, the motor 200 provides power for the input shaft 10, and the power of the input shaft 10 is transmitted to the second-stage output gear 202 by using the second-stage input gear 102, to drive the countershaft 20 to rotate. After the power is transmitted to the differential 90 by using the final reduction input gear 801 and the final reduction output gear 802, the power is output to the wheel connected to the differential 90.

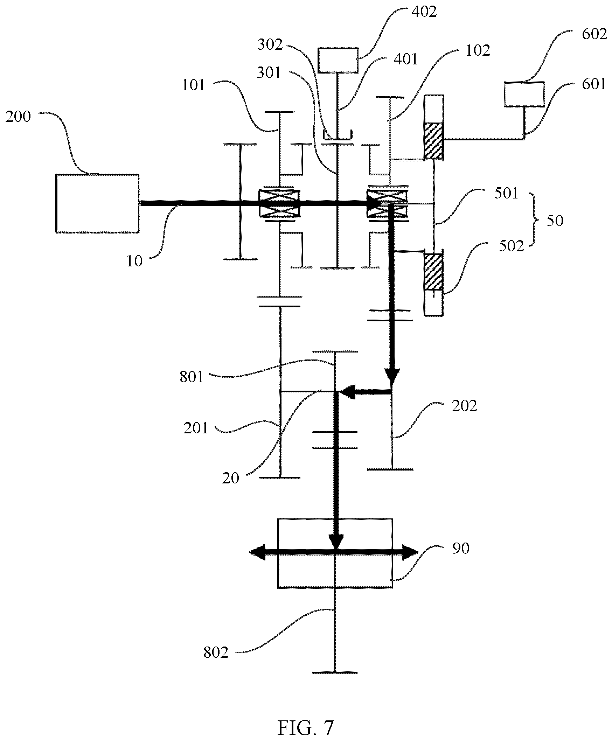

Alternatively, a second-gear driving state may be implemented by using the second clutch 50. As shown in FIG. 7, the second controller 602 controls the second actuation member 601, so that the friction plate 501 of the second clutch 50 is in contact with the clutch cover body 502. Because the friction plate 501 is connected to the input shaft 10, and the clutch cover body 502 is connected to the second-stage input gear 102, the second clutch 50 can be engaged with the second-stage input gear 102. In this case, as shown by an arrow direction in FIG. 7, the motor 200 provides power for the input shaft 10, and the power of the input shaft 10 is transmitted to the second-stage output gear 202 by using the second-stage input gear 102, to drive the countershaft 20 to rotate. After the power is transmitted to the differential 90 by using the final reduction input gear 801 and the final reduction output gear 802, the power is output to the wheel connected to the differential 90.

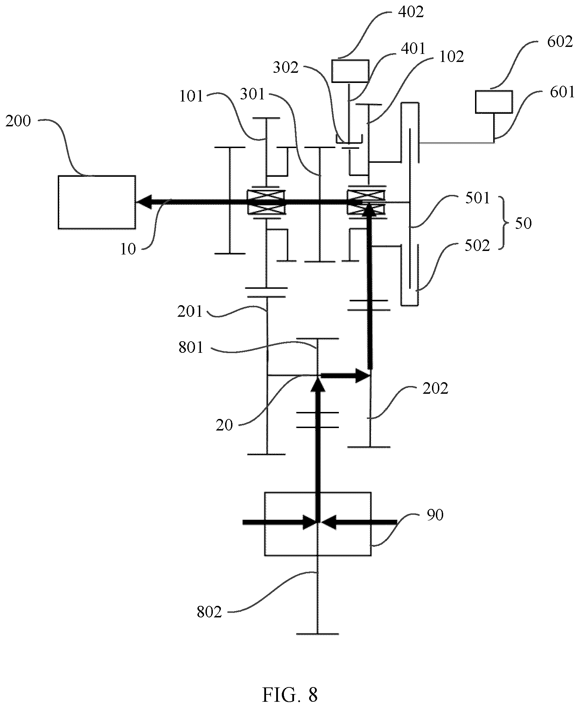

As shown in FIG. 8, when the vehicle needs to stop at a high speed (for example, a second-gear braking state), similarly, the first controller 402 controls the first actuation member 401 to drive the sliding sleeve 302 of the first clutch 30 to a location of the second-stage input gear 102, so that the first clutch 30 is engaged with the second-stage input gear 102. The friction plate 501 of the second clutch 50 is separated from the clutch cover body 502. In this case, the motor is in a power generation mode. As shown by an arrow direction in FIG. 8, torque at a wheel end is sequentially transmitted to the countershaft 20 by using the differential 90, the final reduction output gear 802, and the final reduction input gear 801, and the torque of the countershaft 20 is transmitted to the input shaft 10 by using the second-stage output gear 202 and the second-stage input gear 102, and is output to the motor 200, to implement a second-gear braking function.

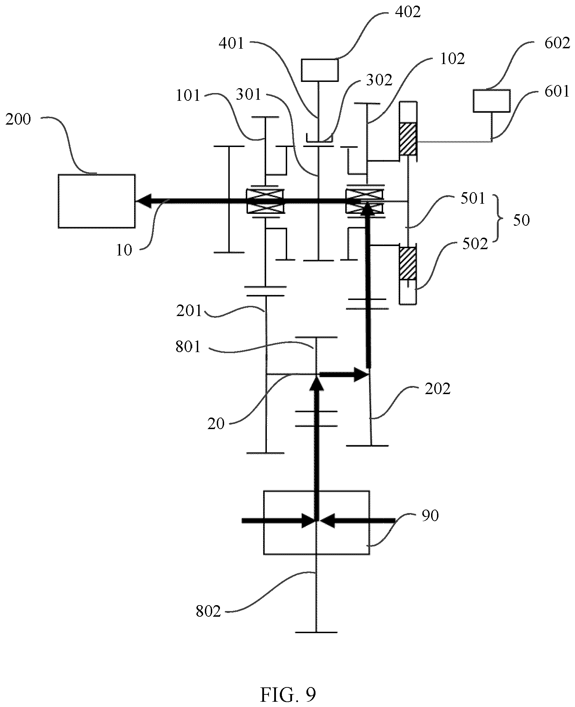

Alternatively, a second-gear braking state may be implemented by using the second clutch 50. As shown in FIG. 9, the second controller 602 controls the second actuation member 601, so that the friction plate 501 of the second clutch 50 is in contact with the clutch cover body 502. Because the friction plate 501 is connected to the input shaft 10, and the clutch cover body 502 is connected to the second-stage input gear 102, the second clutch 50 can be engaged with the second-stage input gear 102. In this case, the motor is in a power generation mode. As shown by an arrow direction in FIG. 9, torque at a wheel end is sequentially transmitted to the countershaft 20 by using the differential 90, the final reduction output gear 802, and the final reduction input gear 801, and the torque of the countershaft 20 is transmitted to the input shaft 10 by using the second-stage output gear 202 and the second-stage input gear 102, and is output to the motor 200, to implement a second-gear braking function.

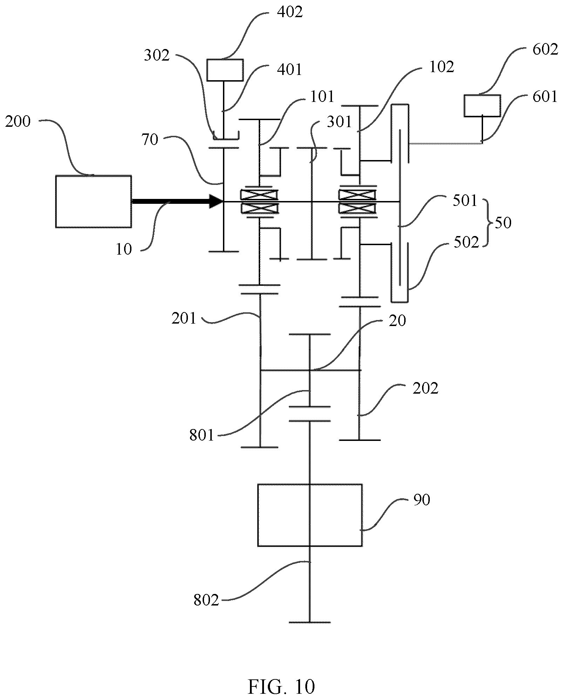

As shown in FIG. 10, when the vehicle is in a parking state, the friction plate 501 of the second clutch 50 is separated from the clutch cover body 502. The first controller 402 controls the first actuation member 401 to drive the sliding sleeve 302 of the first clutch 30 to a location of the parking gear 70, so that the first clutch 30 is engaged with the parking gear 70. In this case, as shown by an arrow direction in FIG. 10, the motor 200 provides power for the input shaft 10, and after the power of the input shaft 10 is transmitted to the parking gear 70, the power cannot continue to be transmitted, to implement a parking function.

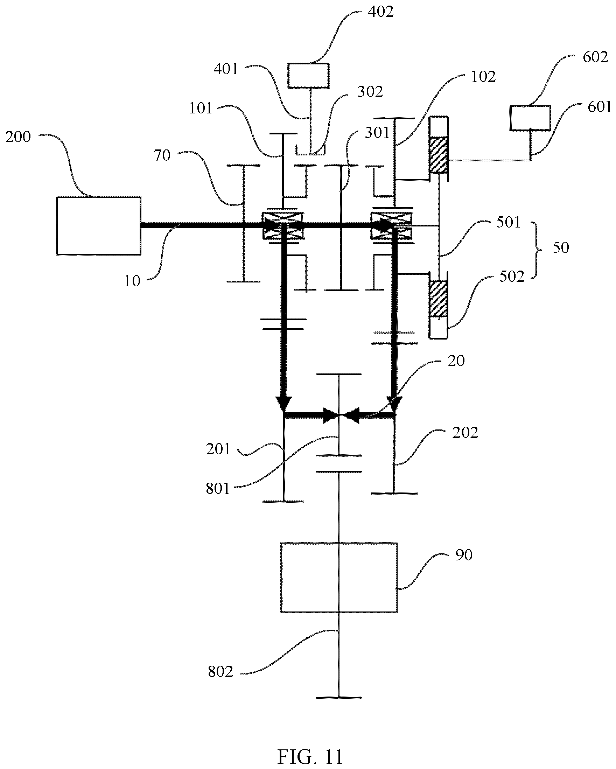

Alternatively, as shown in FIG. 11, the first controller 402 controls the first actuation member 401 to drive the sliding sleeve 302 of the first clutch 30 to a location of the first-stage input gear 101, so that the first clutch 30 is engaged with the first-stage input gear 101. The second controller 602 controls the second actuation member 601, so that the friction plate 501 of the second clutch 50 is in contact with the clutch cover body 502. Because the friction plate 501 is connected to the input shaft 10, and the clutch cover body 502 is connected to the second-stage input gear 102, the second clutch 50 can be engaged with the second-stage input gear 102. In this case, as shown by an arrow direction in FIG. 11, the motor 200 provides power for the input shaft 10, and the power of the input shaft 10 is transmitted to the first-stage output gear 201 by using the first-stage input gear 101, and is transmitted to the second-stage output gear 202 by using the second-stage input gear 102. In this case, input and output of the transmission 100 are interlocked, so that a parking function can be implemented.

The transmission 100 may control, based on a driving condition of the vehicle, disengaging or engaging of the first clutch 30 and the second clutch 50, so that the transmission 100 smoothly and automatically switches between a high gear (second gear) and a low gear (first gear). Compared with a conventional manual transmission and a mechanical automatic transmission, the transmission 100 provided in this embodiment of this application has a small quantity of components and a simple structure, to reduce costs of the transmission 100 and production costs of the vehicle to some extent. In addition, the transmission 100 smoothly shifts a gear, to ensure normal driving of the vehicle.

It may be understood that the schematic structure in this embodiment of this application constitutes no specific limitation on the transmission 100. In some other embodiments of this application, the transmission 100 may include more or fewer components than those shown in the figure, combine some components, split some components, or have different component arrangements.

### Embodiment 2

This embodiment of this application provides a transmission 100. For a structure of the transmission 100, refer to FIG. 2 and FIG. 3.

A difference between Embodiment 2 and Embodiment 1 is that in this embodiment of this application, the first clutch 30 is a unidirectional clutch. For example, the first clutch 30 may be a dog clutch (dog clutch) or a single-sided synchronizer structure. In this way, when the first clutch 30 is disposed on the input shaft 10, the first clutch 30 is configured to connect the input shaft 10 and the first-stage input gear 101. When the first clutch 30 is disposed on the countershaft 20, the first clutch 30 is configured to connect the countershaft 20 and the first-stage output gear 201. Similarly, in this embodiment of this application, while a use function of the transmission 100 is ensured, a quantity of components in the transmission 100 can be reduced, and a structure of the transmission 100 can be simplified, to reduce costs of the transmission 100.

It should be noted that the first clutch 30 may use any possible structure such as a structure with a synchronous ring or a structure without a synchronous ring, for example, a wet clutch or a dry clutch, a single-plate clutch or a multi-plate clutch, an electromagnetic clutch or a hydraulic clutch or a motor clutch, or a normally-opened clutch or a normally-closed clutch. A specific structure of the first clutch 30 is not limited in this embodiment of this application, and the foregoing example imposes no limitation.

The first clutch 30 is connected to the input shaft 10 by using a spline joint or through welding, or the first clutch 30 is connected to the countershaft 20 by using a spline joint or through welding. It should be noted that the spline joint is generally used to connect a gear and a shaft without an interference fit or connect a coupling and a shaft. A spline may be used to axially fasten a connected component, and has a high bearing capability. Specifically, the spline joint includes an inner spline and an outer spline, and both the inner spline and the outer spline are multi-gear components. A spline on an inner cylindrical surface is the inner spline, and a spline on an outer cylindrical surface is the outer spline.

To implement second-gear engaging, the transmission 100 may further include a second clutch 50 (referring to FIG. 2 or FIG. 3). The second clutch 50 is disposed on the input shaft 10 or the countershaft 20. The second clutch 50 is configured to connect the input shaft 10 and the second-stage input gear 102, or the second clutch 50 is configured to connect the countershaft 20 and the second-stage output gear 202.

In this way, the second clutch 50 may be configured to engage the second-stage input gear 102 with the input shaft 10 or engage the second-stage output gear 202 with the countershaft 20, and the first clutch 30 may be configured to engage the first-stage input gear 101 with the input shaft 10 or engage the first-stage output gear 201 with the countershaft 20. Second-gear engaging is performed by using the second clutch 50, and second-gear engaging is performed by using the first clutch 30, so that flexible gear shift of the vehicle can be implemented, and working stability is good, to ensure normal driving of the vehicle.

In this embodiment of this application, the first clutch 30 may include a clutch body 301 and a sliding sleeve 302 connected to the clutch body 301 (referring to FIG. 2 or FIG. 3). The sliding sleeve 302 may be in contact with the first-stage input gear 101 or the first-stage output gear 201, to engage the first clutch 30 with the first-stage input gear 101 or the first-stage output gear 201. Because the first clutch 30 is connected to the input shaft 10 or the countershaft 20 by using a spline joint or through welding, the input shaft 10 and the first-stage input gear 101 or the second-stage input gear 102 and the countershaft 20 and the first-stage output gear 201 or the second-stage output gear 202 may be disengaged or engaged.

The second clutch 50 may include a friction plate 501 and a clutch cover body 502 (referring to FIG. 2 or FIG. 3). When the second clutch 50 is disposed on the input shaft 10, the friction plate 501 is connected to the input shaft 10, and the clutch cover body 502 is connected to the second-stage input gear 102. In this way, when the friction plate 501 is in contact with the clutch cover body 502, the second clutch 50 is engaged with the second-stage input gear 102, or when the friction plate 501 is separated from the clutch cover body 502, the second clutch 50 is disengaged from the second-stage input gear 102. When the second clutch 50 is disposed on the countershaft 20, the friction plate 501 is connected to the countershaft 20, and the clutch cover body 502 is connected to the second-stage output gear 202. In this way, when the friction plate 501 is in contact with the clutch cover body 502, the second clutch 50 is engaged with the second-stage output gear 202, or when the friction plate 501 is separated from the clutch cover body 502, the second clutch 50 is disengaged from the second-stage output gear 202.

It should be noted that, the friction plate 501 may be connected to the input shaft 10 or the countershaft 20 by using a spline joint or through welding, and the clutch cover body 502 may be connected to the second-stage input gear 102 or the second-stage output gear 202 by using a spline joint or through welding.

To engage the first clutch 30 with the first-stage input gear 101 or the first-stage output gear 201 and engage the second clutch 50 with the second-stage input gear 102 or the second-stage output gear 202, the transmission 100 may further include a first actuation component 40 and a second actuation component 60 (referring to FIG. 2 or FIG. 3). The first actuation component 40 is configured to drive at least a part of the first clutch 30 to move, so that the at least a part of the first clutch 30 is in contact with the first-stage input gear 101 or the first-stage output gear 201. The second actuation component 60 is configured to control disengaging and engaging of the second clutch 50.

In this way, the first actuation component 40 can be disposed to control and drive the first clutch 30 to be in contact with the first-stage input gear 101 or the first-stage output gear 201, so that the input shaft 10 or the countershaft 20 is disengaged from or engaged with the first-stage input gear 101 or the first-stage output gear 201. The second actuation component 60 can be disposed to control and drive the second clutch 50 to be in contact with the second-stage input gear 102 or the second-stage output gear 202, so that the input shaft 10 or the countershaft 20 is disengaged from or engaged with the second-stage input gear 102 or the second-stage output gear 202.

Specifically, the first actuation component 40 may include a first actuation member 401 and a first controller 402 connected to the first actuation member 401 (referring to FIG. 2 or FIG. 3). The first controller 402 is configured to control movement of the first actuation member 401, so that the first actuation member 401 drives the sliding sleeve 302 of the first clutch 30 to move.

The second actuation component 60 may include a second actuation member 601 and a second controller 602 connected to the second actuation member 601 (referring to FIG. 2 or FIG. 3). The second controller 602 is configured to control movement of the second actuation member 601, so that the second actuation member 601 drives the friction plate 501 of the second clutch 50 to be close to or away from the clutch cover body 502.

In this embodiment of this application, the transmission 100 may further include a parking gear 70, and both the parking gear 70 and the first clutch 30 are disposed on the input shaft 10, or both the parking gear 70 and the first clutch 30 are disposed on the countershaft 20. The first controller 402 controls the first actuation member to drive the sliding sleeve 302 to a location of the parking gear 70 to be engaged with the parking gear 70, the motor 200 provides power for the input shaft 10, and after the power of the input shaft 10 is transmitted to the parking gear 70, the power cannot continue to be transmitted. In this way, a parking function of the vehicle can be implemented.

On the basis of the foregoing embodiment, the transmission 100 may further include a final reduction drive component 80 (referring to FIG. 2 or FIG. 3). The final reduction drive component 80 may include a final reduction input gear 801 and a final reduction output gear 802 meshed with the final reduction input gear 801. The final reduction input gear 801 is disposed on the countershaft 20, a differential 90 is disposed on the final reduction output gear 802, and the differential 90 is connected to wheels of the vehicle.

When a neutral gear (referring to FIG. 2 or FIG. 3), first-gear driving (referring to FIG. 4), first-gear braking (referring to FIG. 5), second-gear driving (referring to FIG. 7), second-gear braking (referring to FIG. 9), and parking (referring to FIG. 10 and FIG. 11) are implemented, a power transmission state of the transmission 100 provided in this embodiment of this application is the same as or similar to that in the foregoing Embodiment 1, and details are not described herein again.

The transmission 100 may control, based on a driving condition of the vehicle, disengaging or engaging of the first clutch 30 and the second clutch 50, so that the transmission 100 smoothly and automatically switches between a high gear (second gear) and a low gear (first gear). Compared with a conventional manual transmission and a mechanical automatic transmission, the transmission 100 provided in this embodiment of this application has a small quantity of components and a simple structure, to reduce costs of the transmission 100 and production costs of the vehicle to some extent. In addition, the transmission 100 smoothly shifts a gear, to ensure normal driving of the vehicle.

It may be understood that the schematic structure in this embodiment of this application constitutes no specific limitation on the transmission 100. In some other embodiments of this application, the transmission 100 may include more or fewer components than those shown in the figure, combine some components, split some components, or have different component arrangements.

### Embodiment 3

This embodiment of this application provides a vehicle. The vehicle provided in this embodiment of this application may be an electric vehicle (EV), a pure electric vehicle (PEV/BEV), a hybrid electric vehicle (HEV), a range-extended electric vehicle (REEV), a plug-in hybrid electric vehicle (PHEV), a new electric vehicle (New Energy Vehicle), or the like.

In this embodiment of this application, the vehicle includes at least wheels, a drive component, and a motor 200. A rotating shaft of the motor 200 is connected to the wheel by using the drive component. In this way, the rotating shaft of the motor 200 rotates to output power, and the drive component transmits the power to the wheel, so that the wheel rotates.

The drive component may specifically include a driver shaft and the transmission 100 in the foregoing Embodiment 1 or Embodiment 2, the rotating shaft of the motor 200 is connected to the transmission 100, and the transmission 100 is separately connected to two front wheels or two rear wheels by using the driver shaft.

In this embodiment of this application, it should be noted that there may be one or two motors 200 included in the vehicle. When there is one motor 200, the motor 200 is connected to the two front wheels or the two rear wheels by using the drive component. When the motor 200 is connected to the two front wheels by using the drive component, the front wheels are driving wheels, and the rear wheels are driven wheels. Correspondingly, when the motor 200 is connected to the two rear wheels by using the drive component, the rear wheels are driving wheel, and the front wheels are driven wheels. When there are two motors 200, one of the motors 200 is connected to the two front wheels by using a drive component, and the other motor 200 is connected to the two rear wheels by using another drive component.

It may be understood that, in addition to the wheel, the drive component, and the motor 200, the vehicle provided in this embodiment of this application may further include a control board, a vehicle body, and the like. In this embodiment of this application, for another structure of the vehicle, refer to a conventional technology. Details are not described again in this embodiment of this application.

The vehicle provided in this embodiment of this application includes the foregoing transmission 100. A quantity of components in the transmission 100 is reduced, and a structure of the transmission 100 is simplified, to reduce costs of the transmission 100, and reduce production costs of the vehicle to some extent.

In the descriptions of embodiments of this application, it should be noted that unless otherwise specified or limited, terms "mount", "communicate", and "connect" shall be understood in a broad sense, for example, may be a fixed connection, may be an indirect connection by using an intermediate medium, or may be a connection between the inside of two elements or an interaction relationship between two elements. Persons of ordinary skill in the art may understand specific meanings of the foregoing terms in embodiments of this application based on a specific case.

In embodiments of this application, directions or location relationships are not intended to indicate or imply that an indicated apparatus or element needs to have a specific direction or be constructed and operated in a specific direction, and therefore cannot be understood as a limitation on embodiments of this application. In the descriptions of embodiments of this application, unless otherwise specified explicitly, "a plurality of means two or more than two.

In the specification, claims, and accompanying drawings of embodiments of this application, the terms "first", "second", "third", "fourth", and so on (if existent) are intended to distinguish between similar objects but do not necessarily indicate a specific order or sequence. It should be understood that the data termed in such a way is interchangeable in proper circumstances so that embodiments of this application described herein can be implemented in orders except the order illustrated or described herein. In addition, terms such as "include", "have", and any variations thereof are intended to cover non-exclusive inclusions. For example, a process, method, system, product, or device that includes a series of steps or units is not necessarily limited to those clearly listed steps or units, but may include other steps or units that are not clearly listed or inherent to such a process, method, product, or device.

Finally, it should be noted that the foregoing embodiments are merely intended for describing the technical solutions in embodiments of this application other than limiting this application. Although this application is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of this application.

## Claims

1. A transmission, comprising:
an input shaft, a countershaft, and a first clutch disposed on the input shaft or the countershaft, wherein an end of the input shaft is connected to a motor;
a first-stage input gear and a second-stage input gear are disposed on the input shaft, a first-stage output gear and a second-stage output gear are disposed on the countershaft, the first-stage input gear is meshed with the first-stage output gear, and the second-stage input gear is meshed with the second-stage output gear;
the first clutch is a bidirectional clutch; and
when the first clutch is disposed on the input shaft, the first clutch is located between the first-stage input gear and the second-stage input gear, and the first clutch is configured to connect the input shaft and the first-stage input gear or connect the input shaft and the second-stage input gear; or
when the first clutch is disposed on the countershaft, the first clutch is located between the first-stage output gear and the second-stage output gear, and the first clutch is configured to connect the countershaft and the first-stage output gear or connect the countershaft and the second-stage output gear

2. The transmission according to claim 1, further comprising a first actuation component, wherein the first actuation component is configured to drive at least a part of the first clutch to move, so that the at least a part of the first clutch is in contact with any one of the first-stage input gear, the first-stage output gear, the second-stage input gear, and the second-stage output gear.

3. The transmission according to claim 2, wherein the first clutch comprises a clutch body and a sliding sleeve connected to the clutch body; and
the sliding sleeve may be in contact with any one of the first-stage input gear, the first-stage output gear, the second-stage input gear, and the second-stage output gear, to engage the first clutch with any one of the first-stage input gear, the first-stage output gear, the second-stage input gear, and the second-stage output gear

4. The transmission according to claim 3, wherein the first actuation component comprises a first actuation member and a first controller connected to the first actuation member, and the first controller is configured to control movement of the first actuation member, so that the first actuation member drives the sliding sleeve of the first clutch to move.

5. The transmission according to claim 4, further comprising a second clutch, wherein the second clutch is disposed on the input shaft or the countershaft, and the second clutch is configured to connect the input shaft and the second-stage input gear or connect the countershaft and the second-stage output gear

6. The transmission according to claim 5, wherein the second clutch comprises a friction plate and a clutch cover body, the friction plate is connected to the input shaft or the countershaft, and the clutch cover body is connected to the second-stage input gear or the second-stage output gear; and
when the friction plate is in contact with the clutch cover body, the second clutch is engaged with the second-stage input gear or the second-stage output gear, or when the friction plate is separated from the clutch cover body, the second clutch is disengaged from the second-stage input gear or the second-stage output gear.

7. The transmission according to claim 6, further comprising a second actuation component, wherein the second actuation component is configured to control disengaging and engaging of the second clutch.

8. The transmission according to claim 7, wherein the second actuation component comprises a second actuation member and a second controller connected to the second actuation member; and
the second controller is configured to control movement of the second actuation member, so that the second actuation member drives the friction plate of the second clutch to be close to or away from the clutch cover body.

9. A transmission, comprising:
an input shaft, a countershaft, and a first clutch disposed on the input shaft or the countershaft, wherein an end of the input shaft is connected to a motor;
a first-stage input gear and a second-stage input gear are disposed on the input shaft, a first-stage output gear and a second-stage output gear are disposed on the countershaft, the first-stage input gear is meshed with the first-stage output gear, and the second-stage input gear is meshed with the second-stage output gear;
the first clutch is a unidirectional clutch, when the first clutch is disposed on the input shaft, the first clutch is configured to connect the input shaft and the first-stage input gear, or when the first clutch is disposed on the countershaft, the first clutch is configured to connect the countershaft and the first-stage output gear; and
the transmission further comprises a second clutch, the second clutch is disposed on the input shaft or the countershaft, and the second clutch is configured to connect the input shaft and the second-stage input gear, or the second clutch is configured to connect the countershaft and the second-stage output gear

10. The transmission according to claim 9, wherein the first clutch comprises a clutch body and a sliding sleeve connected to the clutch body, and the sliding sleeve may be in contact with the first-stage input gear or the first-stage output gear, to engage the first clutch with the first-stage input gear or the first-stage output gear.

11. The transmission according to claim 10, wherein the second clutch comprises a friction plate and a clutch cover body, the friction plate is connected to the input shaft or the countershaft, and the clutch cover body is connected to the second-stage input gear or the second-stage output gear; and
when the friction plate is in contact with the clutch cover body, the second clutch is engaged with the second-stage input gear or the second-stage output gear, or when the friction plate is separated from the clutch cover body, the second clutch is disengaged from the second-stage input gear or the second-stage output gear.

12. The transmission according to claim 11, further comprising a first actuation component and a second actuation component, wherein
the first actuation component is configured to drive at least a part of the first clutch to move, so that the at least a part of the first clutch is in contact with the first-stage input gear or the first-stage output gear; and
the second actuation component is configured to control disengaging and engaging of the second clutch.

13. The transmission according to claim 12, wherein the first actuation component comprises a first actuation member and a first controller connected to the first actuation member, and the first controller is configured to control movement of the first actuation member, so that the first actuation member drives the sliding sleeve of the first clutch to move.

14. The transmission according to claim 12, wherein the second actuation component comprises a second actuation member and a second controller connected to the second actuation member, and the second controller is configured to control movement of the second actuation member, so that the first actuation member drives the friction plate of the second clutch to be close to or away from the clutch cover body.

15. The transmission according to any one of claims 1 to 14, further comprising a parking gear, wherein both the parking gear and the first clutch are disposed on the input shaft, or both the parking gear and the first clutch are disposed on the countershaft.

16. The transmission according to any one of claims 1 to 15, further comprising a final reduction drive component, wherein the final reduction drive component comprises a final reduction input gear and a final reduction output gear meshed with the final reduction input gear; and
the final reduction input gear is disposed on the countershaft, a differential is disposed on the final reduction output gear, and the differential is connected to wheels of a vehicle.

17. The transmission according to any one of claims 1 to 16, wherein the first clutch is connected to the input shaft by using a spline joint or through welding, or the first clutch is connected to the countershaft by using a spline joint or through welding.

18. The transmission according to any one of claims 1 to 17, wherein the first-stage input gear and the second-stage input gear are connected to the input shaft by using a bearing, so that the first-stage input gear and the second-stage input gear rotate around the input shaft; or
the first-stage output gear and the second-stage output gear are connected to the countershaft by using a bearing, so that the first-stage output gear and the second-stage output gear rotate around the countershaft.

19. The transmission according to claim 6 or 11, wherein the friction plate is connected to the input shaft or the countershaft by using a spline joint or through welding, and the clutch cover body is connected to the second-stage input gear or the second-stage output gear by using a spline joint or through welding.

20. A vehicle, comprising at least wheels, a drive component, and a motor, wherein a rotating shaft of the motor is connected to the wheel by using the drive component; and
the drive component comprises a driver shaft and the transmission according to any one of claims 1 to 19, the rotating shaft of the motor is connected to the input shaft of the transmission, and the transmission is connected to the wheel by using the driver shaft.
